# EUROPEAN PATENT APPLICATION

(11) **EP 2 464 099 A2**
(43) Date of publication of application: **13.06.2012**
(21) Application number: 11191464.4
(22) Date of filing: 01.12.2011
(51) Int. Cl.: H04N 5/232, G06F 3/048

(54) **Image display comprising a liquid detection unit**

(30) Priority: 10.12.2010 JP 2010276129
(71) Applicant: Sony Corporation, Tokyo 108-0075 (JP)
(72) Inventor: Inoue, Hidekazu, Minato-ku, Tokyo 108-0075 (JP)
(74) Representative: Berryman, Robert Jan

(57) **Abstract**

An electronic apparatus includes a display configured to display an image, a liquid detection unit configured to detect liquid on a surface of the display, and a display control unit configured to change a display mode of the display based on the detection of liquid on the surface of the display by the liquid detection unit.

## Description

The present disclosure relates to an electronic apparatus.

There is an electronic apparatus that displays a manipulation image used to perform an manipulation input on a display surface (for example, touch panel) and receives the manipulation input based on a detection state of an object brought close to or into contact with the display surface.

For example, FIG. 7 of Japanese Patent Application Laid-Open No. 2009-212980 discloses an imaging apparatus, in which an assignment button used to assign a dog or a cat as a target of automatic photographing is displayed on the touch panel and the manipulation input is received based on a manipulation to press down the assignment button.

In the imaging apparatus of Japanese Patent Application Laid-Open No. 2009-212980, a user presses down the desired assignment button, which allows the target of the automatic photographing to be easily assigned.

For example, it is assumed that an imaging operation is performed on a beach with a waterproof imaging apparatus including an electrostatic type (capacitance type) touch panel that detects the contact or proximity of an object (such as a finger of a person) having conductivity based on a change in capacitance. In such cases, it is conceivable that the imaging apparatus is splashed with water from the sea and the splash adheres to the imaging apparatus during the imaging operation. Therefore, for example, it is also conceivable that the splash adheres to the touch panel of the imaging apparatus.

At this point, because the water has conductivity, it is conceivable that, when the water adheres to the touch panel of the imaging apparatus, the water is detected as the contact of an object having conductivity and the manipulation input is performed based on the detection state. For example, it is also conceivable that, when the water adheres to the touch panel during the imaging operation of the imaging apparatus, the manipulation input is performed based on the detection state of the water adhesion and an undesired imaging operation (malfunction) is performed based on the manipulation input. Therefore, when the water adheres to the touch panel during the use of the electronic apparatus, it is necessary to prevent the malfunction caused by the water adhesion.

In light of the foregoing, it is desirable to prevent the malfunction at the time of the water adhesion.

According to an embodiment of the present disclosure, there is provided an electronic apparatus including a display configured to display an image, a liquid detection unit configured to detect liquid on a surface of the display, and a display control unit configured to change a display mode of the display based on the detection of liquid on the surface of the display by the liquid detection unit.

According to another embodiment of the present disclosure, there is provided a method including displaying an image on a display, detecting liquid on a surface of the display, and changing a display mode of the display based on the detection of liquid on the surface of the display.

According to yet another embodiment of the present disclosure, there is provided a non-transitory computer readable medium encoded with computer readable instructions which, when loaded on a processor, cause the processor to execute a method including displaying an image on a display, detecting liquid on a surface of the display, and changing a display mode of the display based on the detection of liquid on the surface of the display.

Some embodiments of the present disclosure relate to an electronic apparatus that causes an input/output unit to display a manipulation image to receive a manipulation input, a method for controlling the electronic apparatus, and a program that causes a computer to execute the method.

According to the embodiments of the present disclosure, the effect of preventing the malfunction at the time of the water adhesion is obtained.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described, by way of example only, with reference to the accompanying drawings in which:
FIGS. 1A and 1B are perspective views illustrating an example of a configuration of an imaging apparatus 100 according to a first embodiment of the present disclosure;
FIG. 2 is a block diagram illustrating an example of a functional configuration of the imaging apparatus 100 according to the first embodiment of the present disclosure;
FIG. 3A is a view illustrating an example of a display screen displayed on an input/output unit 150 according to the first embodiment of the present disclosure;
FIG. 3B illustrates an example where an imaging operation is performed at a beach with the imaging apparatus.
FIGS. 4A, 4B, and 4C are views illustrating an example of a relationship between water adhering to a display surface of the input/output unit 150 and an operating state of the input/output unit 150 according to the first embodiment of the present disclosure;
FIG. 5 is a view illustrating a notification example in the case where the water adheres to the display surface of the input/output unit 150 according to the first embodiment of the present disclosure;
FIG. 6 is a view illustrating a notification example in the case where the water adheres to the display surface of the input/output unit 150 according to the first embodiment of the present disclosure;
FIG. 7 is a view illustrating a notification example in the case where the water adheres to the display surface of the input/output unit 150 according to the first embodiment of the present disclosure;
FIG. 8 is a view illustrating a notification example in the case where the water adheres to the display surface of the input/output unit 150 according to the first embodiment of the present disclosure;
FIG. 9 is a flowchart illustrating an example of a procedure of manipulation image disabling control processing performed by the imaging apparatus 100 according to the first embodiment of the present disclosure;
FIG. 10 is a view illustrating an example of a relationship between water adhering to the display surface of the input/output unit 150 and the operating state of the input/output unit 150 according to a second embodiment of the present disclosure;
FIGS. 11A, 11B, and 11C are views illustrating an example of the relationship between water adhering to the display surface of the input/output unit 150 and the operating state of the input/output unit 150 according to the second embodiment of the present disclosure;
FIG. 12 is a view illustrating a display example in the case where the water adheres to the display surface of the input/output unit 150 according to the second embodiment of the present disclosure;
FIG. 13 is a flowchart illustrating an example of a procedure of manipulation image disabling control processing performed by the imaging apparatus 100 according to the second embodiment of the present disclosure;
FIG. 14 is a flowchart illustrating an example of partial disable processing in the procedure of the manipulation image disabling control processing performed by the imaging apparatus 100 according to the second embodiment of the present disclosure; and
FIG. 15 is a flowchart illustrating an example of entire disable processing in the procedure of the manipulation image disabling control processing performed by the imaging apparatus 100 according to the second embodiment of the present disclosure.

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

The description will be made in the following order.
1. First embodiment (manipulation image disabling control: an example in which, when water adheres to a display surface of an input/output unit, a manipulation input from the input/output unit is disabled, a user is notified of the disabling, and a manipulation image is deleted from the display surface.)
2. Second embodiment (manipulation image disabling control: an example in which, when water less than a certain amount adheres to the display surface of the input/output unit, part of the manipulation input from the input/output unit is disabled, the user is notified of the disabling, and only the manipulation image that does not become an disabling target is enlarged and displayed on the display surface.)

### 1. First Embodiment

### (Example of Configuration of Imaging Apparatus)

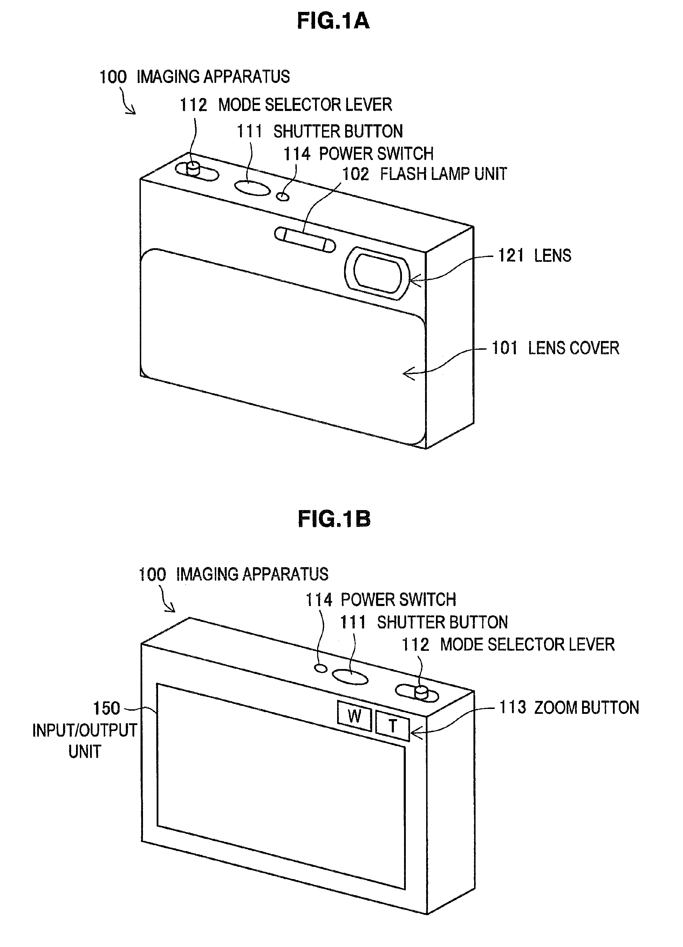

FIGS. 1A and 1B are perspective views illustrating an example of a configuration of an imaging apparatus 100 according to a first embodiment of the present disclosure. FIG. 1A illustrates an appearance of a front surface (that is, a surface in which a lens 121 directed at a subject is provided) side of the imaging apparatus 100. FIG. 1B illustrates an appearance of a rear surface (that is, a surface of an input/output unit 150 directed toward the user) side of the imaging apparatus 100.

The imaging apparatus 100 includes a lens cover 101, a flash lamp unit 102, a shutter button 111, a mode selector lever 112, a zoom button 113, a power switch 114, a lens 121, and the input/output unit 150. For example, the imaging apparatus 100 is implemented by a digital still camera and a digital video camera (such as a camera built-in recorder), to which a waterproof treatment is performed using a waterproof member (not illustrated) that prevents liquid from entering the apparatus. Although other manipulation members are also provided in the imaging apparatus 100, the illustrations and descriptions of the manipulation members are omitted. The imaging apparatus 100 is an example of the electronic apparatus described in claims.

Each device provided on the front surface side of the imaging apparatus 100 is covered with the lens cover 101. The lens cover 101 can vertically be moved, and the lens 121 and the flash lamp unit 102 can be covered with the lens cover 101 in a non-imaging operation state by moving the lens cover 101 upward in the vertical direction.

The flash lamp unit 102 is a light emitting device that emits light to the subject. For example, the flash lamp unit 102 is used when the imaging operation is performed with the imaging apparatus 100 in an environment, such as nighttime and a room inside, in which sufficient luminance is not expected.

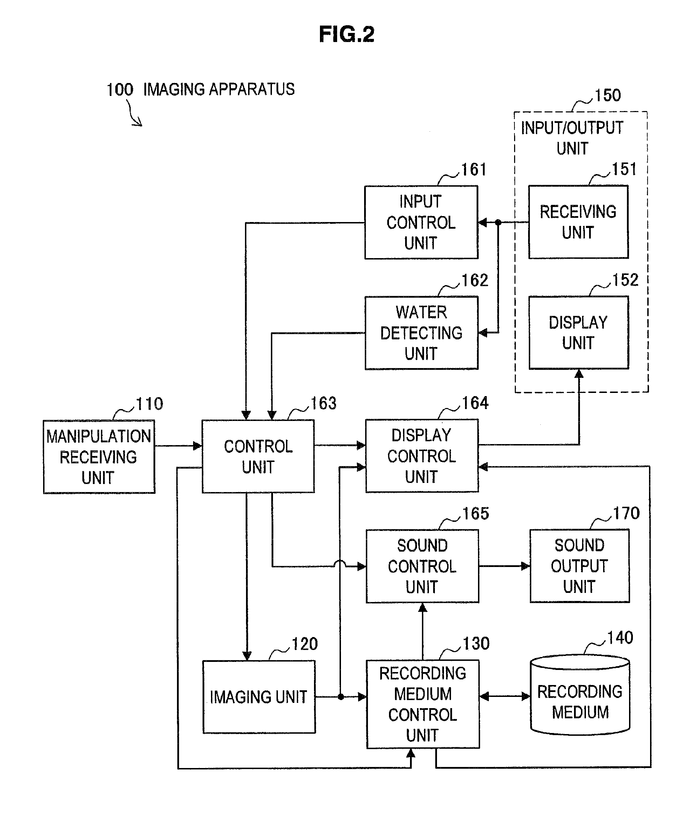

The shutter button 111 is a manipulation member that is pressed down by the user when the captured image (image data) that is generated by capturing the subject is recorded as a content (still image content). For example, in the case where a still image capturing mode is set to record a still image, a focus is controlled to perform auto focus when the shutter button 111 is pressed halfway. When the shutter button 111 is fully pressed, the focus control is performed, and the captured image (image data) generated by an imaging unit 120 (FIG. 2) at this full press is recorded as the content (still image content) in a recording medium 140 (FIG. 2).

The mode selector lever 112 is a manipulation member that is used in performing a functional-mode switching manipulation. For example, one of an imaging mode in which the generated image data is recorded as an image content and a reproducing mode in which the recorded image content is reproduced is set as the functional mode.

The mode selector lever 112 is a mode switching manipulation member that is used in performing the functional-mode switching manipulation. For example, one of the imaging modes in which the generated captured image (image data) is recorded as the content (still image content or moving image content) and the reproducing mode in which the stored content is reproduced is set as the functional mode. One of a still image capturing mode in which the generated captured image is recorded as the still image content (still image file) and a moving image capturing mode in which the generated captured image is recorded as the moving image content (moving image file) can be set as the imaging mode.

The zoom button 113 is a manipulation member that is used in performing a zoom manipulation (manipulation to adjust zoom magnification). For example, as illustrated in FIG. 1B, a W (wide) button (wide-side button) and a T (tele) button (tele-side button) are provided as the zoom button 113.

The power switch 114 is a manipulation member that is used in turning on and off the power of the imaging apparatus 100.

The lens 121 (including a zoom lens and a focus lens) collects light from the subject.

The input/output unit 150 displays various images and receives a manipulation input from the user based on a detection state of an object that is brought close to or into contact with a display surface. The input/output unit 150 is also called a touch screen or a touch panel.

### (Example of Functional Configuration of Imaging Apparatus)

FIG. 2 is a block diagram illustrating a functional configuration of the imaging apparatus 100 according to the first embodiment of the present disclosure.

The imaging apparatus 100 includes a manipulation receiving unit 110, the imaging unit 120, a recording medium control unit 130, the recording medium 140, the input/output unit 150, an input control unit 161, a water detecting unit 162, a control unit 163, a display control unit 164, a sound control unit 165, and a sound output unit 170.

The imaging apparatus 100 includes a sound input unit (such as a microphone, not illustrated) that records the sound around the imaging apparatus 100 to convert the sound into an electric signal (sound signal) and a sound signal processor (not illustrated) that performs predetermined signal processing to the sound signal. For example, in the case where the captured image (image data) generated by the imaging unit 120 is recorded as the moving image content in the recording medium 140, the captured image is recorded while the sound signal (sound data) to which the signal processing is performed by the sound signal processor is included in the moving image content.

The manipulation receiving unit 110 is one that receives the manipulation performed by the user, and outputs a control signal (manipulation signal) to the control unit 163 according to contents of the received manipulation. The manipulation receiving unit 110 corresponds to the shutter button 111, the mode selector lever 112, the zoom button 113, and the power switch 114 of FIGS. 1A and 1B.

The imaging unit 120 includes an imaging element (not illustrated) that converts the light of the subject incident through the lens (such as the lens 121 of FIG. 1A) into the electric signal and an image signal processor (not illustrated) that processes an output signal (imaging signal) of the imaging element to generate the captured image (image data). That is, in the imaging unit 120, an optical image of the subject incident through the lens is formed on an imaging surface of the imaging element, the imaging element performs the imaging operation, and the image signal processor performs the signal processing on the imaging signal, thereby generating the captured image. The captured image is generated based on an instruction to start the imaging operation, which is issued from the manipulation receiving unit 110 or a receiving unit 151. The generated captured image is supplied to the recording medium control unit 130 and the display control unit 164.

The recording medium control unit 130 controls recording of data in the recording medium 140 and reading of data from the recording medium 140 under the control of the control unit 163. For example, the recording medium control unit 130 records the captured image (image data) output from the imaging unit 120 as the still image content (still image file) in the recording medium 140. For example, the recording medium control unit 130 records the moving image content (moving image file), in which the captured image (image data) output from the imaging unit 120 and the sound data output from the sound signal processor (not illustrated) are correlated with each other, in the recording medium 140. For example, the recording medium control unit 130 reads the moving image content stored in the recording medium 140, outputs the image data included in the moving image content to the display control unit 164, and outputs the sound data included in the moving image content to the sound control unit 165.

Various pieces of information (still image content and moving image content) are stored in the recording medium 140 under the control of the recording medium control unit 130. The various pieces of information stored in the recording medium 140 are supplied to the recording medium control unit 130.

The input/output unit 150 includes the receiving unit 151 and a display unit 152. For example, an electrostatic type (capacitance type) touch panel that detects the contact or proximity of an object (such as a finger of a person) having conductivity based on a change in capacitance can be used as the receiving unit 151. For example, a display panel such as an LCD (Liquid Crystal Display) panel and an organic EL (Electro Luminescence) panel can be used as the display unit 152. The input/output unit 150 is configured by overlapping a transparent touch panel on the display surface of the display panel. A board (not illustrated) on which various electronic circuits are mounted is provided in a rear surface of the display panel, and the board and the display panel are electrically connected.

The input/output unit 150 displays various images on the display unit 152 under the control of the display control unit 164 and receives the manipulation input from the user through the receiving unit 151 based on the detection state of the object that is brought close to or into contact with the display surface (the display surface of the display unit 152) of the input/output unit 150. The receiving unit 151 outputs a control signal to the input control unit 161 and the water detecting unit 162 in response to the received manipulation input.

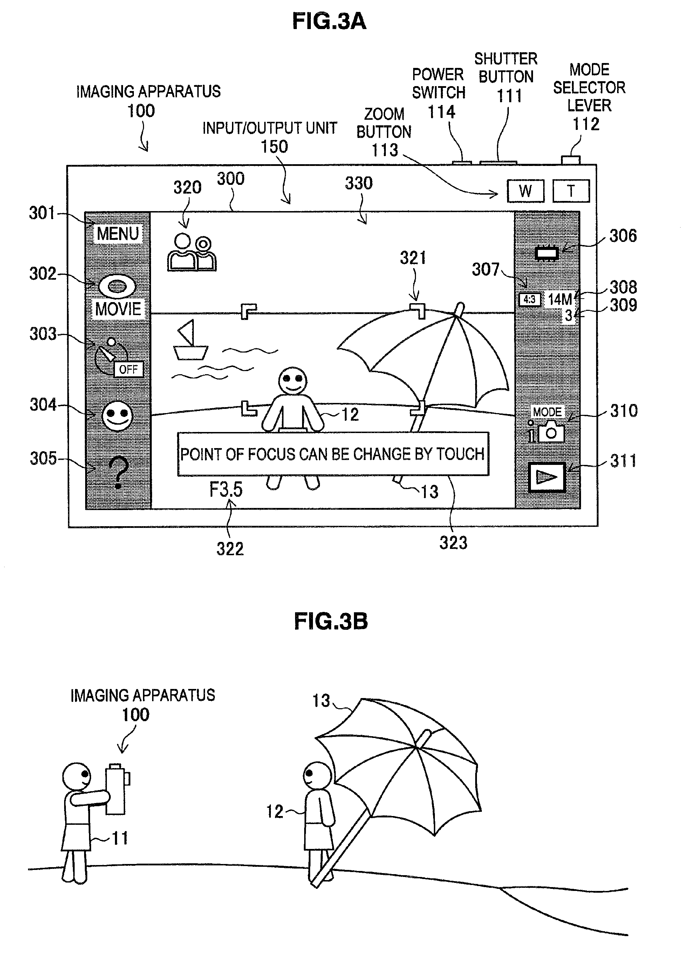

The receiving unit 151 receives the manipulation input relating to the manipulation image (for example, icons 301 to 305 of FIG. 3A) displayed on the display unit 152 based on the detection state of the object (for example, a user's finger) that is brought close to or into contact with the display surface of the input/output unit 150. For example, the receiving unit 151 includes plural electrostatic sensors arrayed into a lattice shape. In the electrostatic sensor, the capacitance is increased when the object (for example, the user's finger) having the conductivity is brought close to or into contact with the display surface of the input/output unit 150. When the capacitance of the electrostatic sensor changes, the receiving unit 151 outputs information (electrostatic sensor information) including the capacitance value of the electrostatic sensor and a position of the electrostatic sensor on the manipulation surface of the receiving unit 151 to the input control unit 161 and the water detecting unit 162.

The display unit 152 is a display panel on which each image is displayed under the control of the display control unit 164. For example, a setting screen (for example, a display screen 300 of FIG. 3A) for making various settings in performing the imaging operation and the captured image (so-called through image) output from the imaging unit 120 are displayed on the display unit 152. For example, the content (for example, still image content or moving image content) stored in the recording medium 140 is also displayed on the display unit 152. The manipulation image (for example, icons 301 to 305 of FIG. 3A) used in user's manipulation input is also displayed on the display unit 152.

The input control unit 161 controls the user's manipulation input (for example, touch manipulation) received by the receiving unit 151. For example, the input control unit 161 detects a range (contact range) where the user's finger comes into contact with the display surface of the input/output unit 150 based on the electrostatic sensor information output from the receiving unit 151, and the input control unit 161 converts the contact range into a coordinate based on a coordinate axis corresponding to the display surface. The input control unit 161 computes a shape of the contact range based on the converted coordinate and computes a coordinate of a gravity center in the shape. The input control unit 161 uses the computed coordinate of the gravity center as the coordinate of a position (contact position) with which the user's finger comes into contact. The input control unit 161 outputs the computed shape of the contact range and the computed coordinate of the contact position to the control unit 163. The control unit 163 recognizes the user's manipulation input on the display surface of the input/output unit 150 based on the shape of the contact range and the coordinate of the contact position, which are output from the input control unit 161.

The water detecting unit 162 detects water adhering to the display surface of the input/output unit 150 based on the electrostatic sensor information output from the receiving unit 151. For example, the water detecting unit 162 detects that the water adheres to the display surface of the input/output unit 150 in the case where a charge (for example, even charge) is detected in a region not smaller than a predetermined region on the display surface of the input/output unit 150. For example, similarly to the input control unit 161, the water detecting unit 162 computes the shape of the contact range on the display surface of the input/output unit 150 and can determine whether the charge is detected in a region not smaller than a predetermined region on the display surface of the input/output unit 150 based on the computed shape. The water detecting unit 162 outputs the detection result (water detection information) to the control unit 163 in the case where the water adhering to the display surface of the input/output unit 150 is detected. The water detection information includes the shape of the contact range on the display surface of the input/output unit 150 and the detected water amount (for example, a ratio (or area) of the water to the display surface of the input/output unit 150). The water amount can be computed based on the shape of the contact range on the display surface of the input/output unit 150. In the first embodiment, the water is detected based on the electrostatic sensor information output from the receiving unit 151. Alternatively, another water detection method may be adopted. For example, the water may be detected with a waterdrop sensor or a waterdrop detecting electrode.

The control unit 163 controls each unit of the imaging apparatus 100 based on a manipulation signal from the manipulation receiving unit 110, the shape of the contact range and the coordinate of the contact position from the input control unit 161, and the water detection information from the water detecting unit 162. For example, in the case where the manipulation receiving unit 110 receives the manipulation input, the control unit 163 performs the control according to the manipulation input. The control unit 163 performs processing of enabling or disabling the manipulation input in which the manipulation image displayed on the display unit 152 is used, and performs switching control of the manipulation input in which the manipulation image is used. As used herein, the manipulation image means an image that is displayed when the manipulation input is performed by the input/output unit 150 and an image that is used to perform the manipulation input. Examples of the manipulation image include a manipulation icon (for example, icons 301 to 305 of FIG. 3A) used to perform the touch manipulation and a manipulation icon used to perform an image forward manipulation.

For example, the control unit 163 determines whether the water adhering to the display surface of the input/output unit 150 is detected based on the water detection information output from the water detecting unit 162. When the water adhering to the display surface of the input/output unit 150 is detected, the control unit 163 performs control to change at least part of a display mode on the display surface of the input/output unit 150. At this point, when the water adhering to the display surface of the input/output unit 150 is detected, the control unit 163 may change the display mode only in the case where the detected adhesion water amount is larger than a predetermined amount (for example, the ratio of the water to the display surface is 30%).

For example, the display mode can be changed by changing at least part of the manipulation images (for example, icons 301 to 305 of FIG. 3A) displayed on the display unit 152. In this case, for example, the manipulation image can be changed by erasing at least a part of the plural manipulation icons (for example, icons 301 to 305 of FIG. 3A) used to perform the manipulation input.

For example, when the water adhering to the display surface of the input/output unit 150 is detected, the control unit 163 performs control to disable at least a part of the reception of the manipulation inputs relating to the manipulation images displayed on the display unit 152. In this case, the control unit 163 changes the display mode by displaying that at least a part of the reception of the manipulation inputs is disabled.

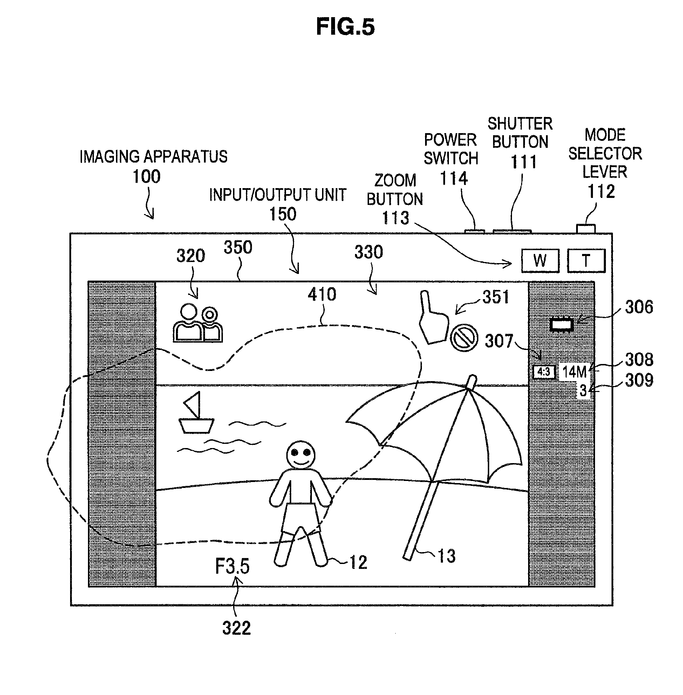

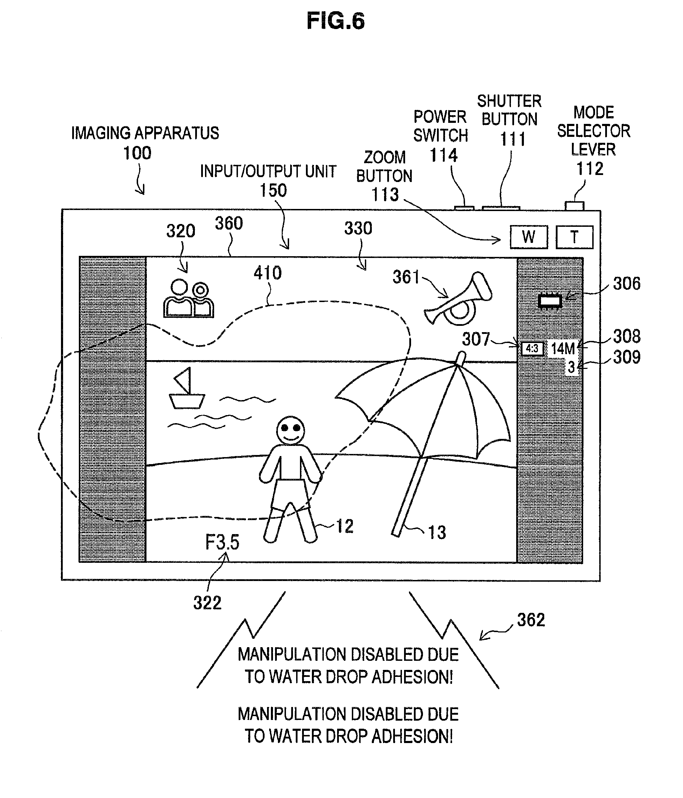

For example, the reception of the manipulation input relating to at least a part of the plural manipulation icons (for example, icons 301 to 305 of FIG. 3A) used to perform the manipulation input is disabled, and the user is notified that the reception of the manipulation input relating to at least a part of the plural manipulation icons is disabled, which allows the display mode to be changed. For example, the notification that the reception of the manipulation input relating to at least a part of the plural manipulation icons is disabled can be made by displaying notification information indicating that the manipulation input relating to the disabled manipulation icon is performed on the display unit 152. For example, as illustrated in FIGS. 5 to 8, a warning icon 351, a warning icon 361, a warning icon in a message display region 371, and a warning icon in a message display region 376 can be displayed as the notification information on the display unit 152. As illustrated in FIGS. 5 to 8, the notification that the reception of the manipulation input relating to at least a part of the plural manipulation icons is disabled can be made by erasing the disabled manipulation icon from the display unit 152. As illustrated in FIG. 6, the notification that the reception of the manipulation input relating to at least a part of the plural manipulation icons is disabled can be made by a sound output of notification information (for example, warning sound 362) indicating that the manipulation input relating to the disabled manipulation icon is hardly performed.

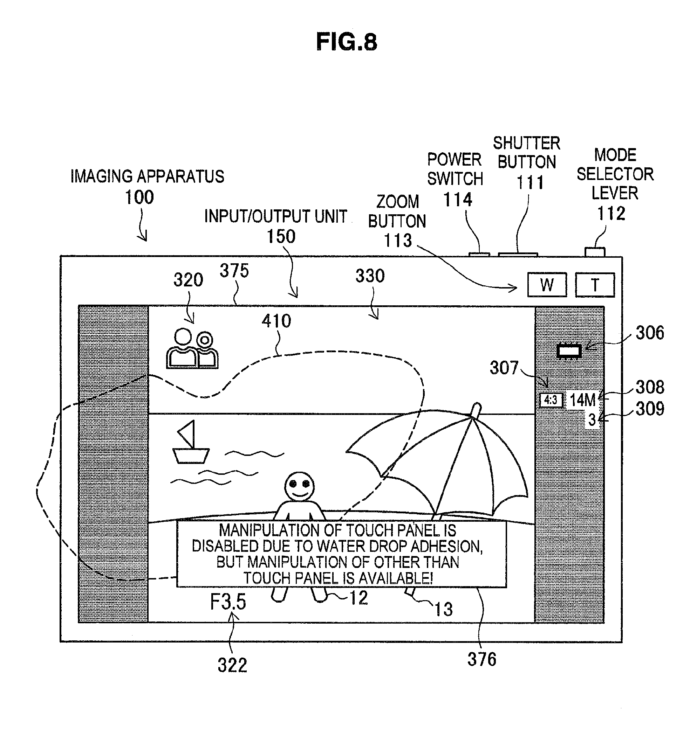

For example, if the reception of at least a part of the manipulation inputs relating to the manipulation images displayed on the display surface of the input/output unit 150 is disabled, the user is notified that the reception of at least a part of the manipulation inputs is disabled and that the reception of the manipulation inputs with the manipulation member (such as the shutter button 111) is enabled, and the display mode can be changed. For example, as illustrated in FIG. 8, the notification can be made by displaying the warning message in the message display region 376 on the display unit 152.

In the first embodiment, in the case where the water adhering to the display surface of the input/output unit 150 is detected, all the receptions of the manipulation images are disabled, and all the manipulation images are erased. In the second embodiment, in the case where the water adhering to the display surface of the input/output unit 150 is detected, a part of the receptions of the manipulation images is disabled, and the manipulation image that is the disabling target is erased. That is, only the reception of the specific manipulation image in the manipulation images is enabled, and the specific manipulation image is enlarged and displayed.

The display control unit 164 outputs each image to the display unit 152 under the control of the control unit 163. For example, the display control unit 164 causes the display unit 152 to display the setting screen (for example, the display screen 300 of FIG. 3A) for making various settings in performing the imaging operation and the captured image (so-called the through image) output from the imaging unit 120. For example, the display control unit 164 causes the display unit 152 to display the manipulation image (for example, the icons 301 to 305 of FIG. 3A) used in the user's manipulation input.

The sound control unit 165 causes the sound output unit 170 to output each piece of sound information under the control of the control unit 163. For example, the sound control unit 165 causes the sound output unit 170 to output the warning sound (for example, warning sound 362 of FIG. 6), thereby notifying the user.

The sound output unit 170 outputs sound information (for example, warning sound 362 of FIG. 6) under the control of the sound control unit 165. For example, the sound output unit 170 is implemented by a speaker.

### (Example of Display Screen during Setting of Imaging Mode)

FIG. 3A is a view illustrating an example of a display screen (display screen 300) displayed on the input/output unit 150 of the first embodiment. FIG. 3A illustrates an example of the display screen (display screen 300) in the case where the imaging operation is performed in the state illustrated in FIG. 3B. FIG. 3B simply illustrates the case where the imaging operation is performed at a beach with the imaging apparatus 100.

A transition button 301 making a transition to a menu screen, a moving image capturing operation start button 302, a transition button 303 making a transition to a self-timer setting menu, a smile shutter mode setting button 304, and a help function performing button 305 are displayed on the display screen 300. A recording medium notification icon 306, an aspect ratio notification icon 307, an image size notification icon 308, a notification icon 309 notifying the user of the number of recordable images, and a transition button 310 making a transition to a mode switching screen are also displayed on the display screen 300. A transition button 311 making a transition to a reproducing mode, a setting mode notification icon 320, a focus frame 321, an F-value notification icon 322, and a message display region 323 are also displayed on the display screen 300.

The transition button 301 making the transition to the menu screen is an icon that is pressed down in making the transition to the menu screen. When the transition button 301 making the transition to the menu screen is pressed down, the menu screen is displayed on the input/output unit 150.

The moving image capturing operation start button 302 is an icon that is pressed down in starting the moving image capturing operation. When the moving image capturing operation start button 302 is pressed down, the mode is set to the moving image capturing mode to start the moving image capturing operation.

The transition button 303 for making the transition to the self-timer setting menu is an icon that is pressed down to display a self-timer setting menu screen through which a self-timer can be set. When the transition button 303 making the transition to the self-timer setting menu is pressed down, the self-timer setting menu screen is displayed on the input/output unit 150.

The smile shutter mode setting button 304 is an icon that is pressed down in setting a smile shutter mode. When the smile shutter mode setting button 304 is pressed down, the smile shutter mode is set. The smile shutter mode is an imaging mode in which still image recording processing is automatically performed when a person included in the image data generated by the imaging unit 120 smiles.

The help function performing button 305 is an icon that is pressed down in performing a help function (guide function). That is, when the help function performing button 305 is pressed down, a screen in which the help function (guide function) is performed is displayed on the input/output unit 150.

The recording medium notification icon 306 is an icon that shows that the recording medium is the recording target of the image data generated by the imaging unit 120. For example, in the case where the image data generated by the imaging unit 120 is recorded in a memory (for example, recording medium 140) incorporated in the imaging apparatus 100, the icon expressing the memory is displayed as the recording medium notification icon 306.

The aspect ratio notification icon 307 is an icon that shows an aspect ratio of the image (still image). For example, 4:3 or 16:9 is displayed as the aspect ratio notification icon 307.

The image size notification icon 308 is an icon that shows an image size of the image (still image). For example, "14M" indicating the image size of 14 megapixels is displayed as the image size notification icon 308.

The notification icon 309 notifying the user of the number of recordable images is an icon that shows the number of images (still images), which can be recorded in the memory (for example, recording medium 140) incorporated in the imaging apparatus 100. For example, a value of "3" indicates that the number of recordable images and is displayed as the notification icon 309 notifying the user of the number of recordable images.

The transition button 310 for making the transition to the mode switching screen is an icon that is pressed down to display the mode switching screen in which the mode is switched. When the transition button 3 10 making the transition to the mode switching screen is pressed down, the mode switching screen is displayed on the input/output unit 150.

The transition button 311 for making the transition to the reproducing mode is a button that is pressed down to transition to the reproducing mode. When the transition button 311 making the transition to the reproducing mode is pressed down, the reproducing mode is set.

The setting mode notification icon 320 is an icon that shows the currently-set mode. For example, an indicator expressing one of the reproducing mode and the imaging mode (still image capturing mode, panoramic image capturing mode, and moving image capturing mode) is displayed. For example, as illustrated in FIG. 3A, a person imaging mode is set in the case where a person (user 12) is included in the through image (the captured image generated by the imaging unit 120) displayed in a through image display region 330. In this case, an icon expressing the person imaging mode is displayed as the setting mode notification icon 320.

The focus frame 321 is a frame that is used to specify a target (focusing target) that is brought into focus in the subjects displayed on the input/output unit 150, and the focus frame 321 is displayed as four outline angle brackets near the center of the display screen 300. That is, one or plural subjects is brought into focus in the subjects existing in the focus frame 321.

The F-value notification icon 322 is an icon that notifies the user of a currently-set F value. For example, in the case where "F3.5" is displayed as the F-value notification icon 322, it means that the currently-set F value is "F3.5".

The message display region 323 is a region where a message for supporting the manipulation of the user is displayed.

The through image display region 330 is a region where the through image is displayed. For example, as illustrated in FIG. 3B, in the case where a user 11 performs the imaging operation to the user 12 located near a beach umbrella 13 as a principal subject with the imaging apparatus 100, the through image of the user 12 is displayed on the through image display region 330.

The icons are displayed on the display screen 300 illustrated in FIG. 3A by way of example. For example, the icons are appropriately changed according to the setting mode and the imaging operation state.

The icons 301 to 305 displayed on the left of the display screen 300, the transition button 310 for making the transition to the mode switching screen, and the transition button 311 for making the transition to the reproducing mode are the manipulation icons that are used when the user performs the manipulation input. On the other hand, other icons (such as the recording medium notification icon 306 and the aspect ratio notification icon 307) indicate the current state, and are not used when the user performs the manipulation input.

For example, as illustrated in FIG. 3B, it is assumed that the imaging operation is performed on a beach with the imaging apparatus 100. For example, it is assumed that friends who play on an edge of the water while making brilliant splashes are captured. Because the imaging apparatus 100 has the waterproof function, it is conceivable that the imaging operation is performed on the edge of the water or in a relatively shallow sea. In such imaging operations, it is also conceivable that the imaging apparatus 100 is splashed with water from the sea and the splash adheres to the display surface of the input/output unit 150.

As described above, because the water has conductivity, in the case where the water adheres to the display surface of the input/output unit 150, the manipulation input relating to the manipulation image is performed due to the water adhesion, and possibly an undesired imaging operation (malfunction) is performed based on the manipulation input. Therefore, in the first embodiment of the present disclosure, in the case where the water adheres to the display surface of the input/output unit 150 during the use of the imaging apparatus 100, the erasure of the manipulation image and the processing of disabling the manipulation input relating to the manipulation image are performed in order to prevent the malfunction due to the water adhesion.

### (Example of Relationship between Water adhering to Display Surface of Input/Output Unit and Operating State of Input/Output Unit)

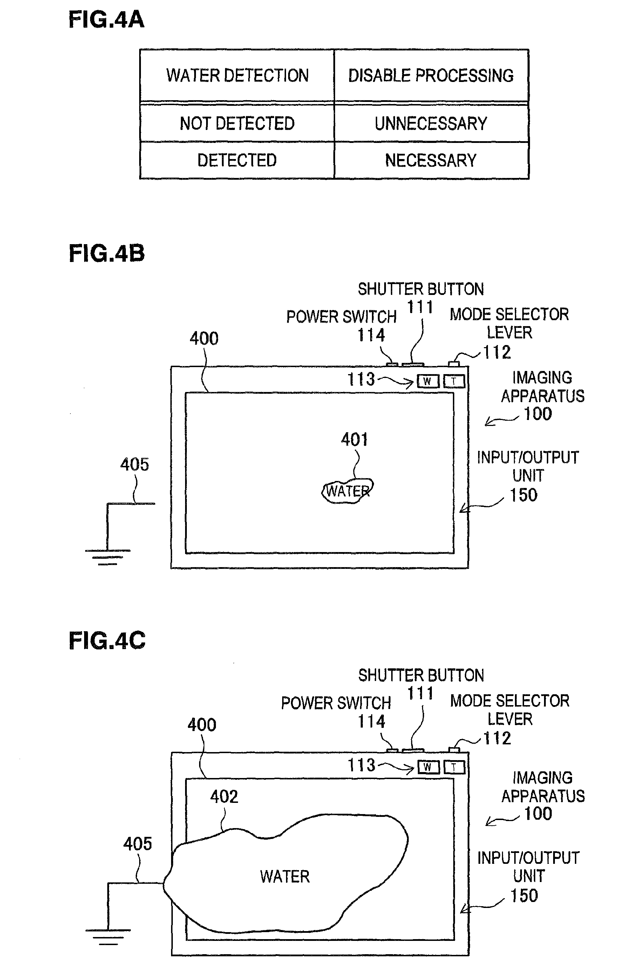

FIGS. 4A, 4B, and 4C are views illustrating an example of a relationship between water adhering to the display surface of the input/output unit 150 and the operating state of the input/output unit 150 in the first embodiment of the present disclosure. For the purpose of easy understanding, in FIGS. 4B and 4C, the amount of water adhering to the display surface of the input/output unit 150 is described while divided into two stages.

FIG. 4A illustrates an example of a relationship between the existence or non-existence of the water detected by the water detecting unit 162 and the necessity of the disable processing performed by the control unit 163. FIG. 4B simply illustrates water 401 adhering to a display surface 400 of the input/output unit 150, and FIG. 4C simply illustrates water 402 adhering to the display surface 400 of the input/output unit 150. FIGS. 4B and 4C also schematically illustrate grounding states of the water 401 1 and water 402, which adhere to the display surface 400, using the numeral 405 that expresses the grounding. FIG. 4B also illustrates the case where a relatively small amount of water adheres to the display surface 400, and FIG. 4C also illustrates the case where a relatively large amount of water adheres to the display surface 400.

For example, as illustrated in FIG. 4B, the charge has little influence on the manipulation input in the case where the small amount of water 401 (for example, the ratio of the water 401 to the display surface 400 is lower than 30%) adheres to the display surface 400 of the input/output unit 150 and the water 401 is not grounded. In this case, the water detecting unit 162 does not detect the water 401 adhering to the display surface 400 of the input/output unit 150. Therefore, the control unit 163 determines that the operating state of the input/output unit 150 is in a normal state and performs various kinds of control. However, when the user touches the portion of the water 401 on the display surface 400 with user's finger, the change in charge is widely generated because the water 401 becomes the grounded state. In this case, the water detecting unit 162 detects the water 401 adhering to the display surface 400.

For example, as illustrated in FIG. 4C, the charge has large influence on the manipulation input in the case where the large amount of water 402 (for example, the ratio of the water 402 to the display surface 400 is not lower than 30%) adheres to the display surface 400 of the input/output unit 150 and the water 402 is grounded. In this case, the water detecting unit 162 detects the water 402 adhering to the display surface 400 of the input/output unit 150. In order to prevent malfunction due to the water adhesion, the control unit 163 performs the processing of disabling the manipulation input relating to the manipulation image displayed on the display surface of the input/output unit 150 and erases the manipulation image that becomes the disabling target. FIGS. 5 to 8 illustrate examples in which the disable processing is performed to erase the disabled manipulation image.

### (Example of Notification in the case where Water adheres to Display Surface of Input/Output Unit)

FIGS. 5 to 8 are views illustrating notification examples in the case where the water adheres to the display surface of the input/output unit 150 in the first embodiment of the present disclosure. In FIGS. 5 to 8, similarly to the example of FIG. 4C, the amount of water 410 larger than a predetermined amount (for example, the ratio of the water 410 to the display surface is 30%) adheres to the display surface of the input/output unit 150, and the water 410 is grounded. Therefore, the display mode is changed. In FIGS. 5 to 8, the water 410 is schematically expressed by a bold dotted line for the purpose of the easy description. FIGS. 5 to 8 illustrate examples in which only part (the plural manipulation icons used to perform the manipulation input and the warning message) of the display mode on the display surface of the input/output unit 150 is changed. FIGS. 5 to 8 illustrate examples in which all the reception of the plural manipulation icons (manipulation images) used to perform the manipulation inputs are disabled to erase all the plural manipulation icons.

FIG. 5 illustrates a notification example in which the manipulation icon that can be manipulated by the user is erased from the display surface to display a warning icon 351 when the water not less than a predetermined amount adheres to the display surface of the input/output unit 150. The warning icon 351 includes an indicator expressing a hand and an indicator expressing prohibition. The warning icon 351 may be displayed in a blinking manner so as to be easily recognized by the user or displayed by a color that can be distinguished from other colors.

When the display screen 300 of FIG. 3A and a display screen 350 of FIG. 5 are compared, the icons 301 to 305, 310, and 311 that are used when the user performs the manipulation input are erased from the display screen 350. On the other hand, the icons 306 to 309 and 320, which express the current state but are not used when the user performs the manipulation input, are not erased from the display screen 350.

Thus, the disable processing is performed to the icons that are used when the user performs the manipulation input, and the icons are erased from the display screen 350, so that the manipulation input is hardly performed in the input/output unit 150. Therefore, in the case where the water not less than a predetermined amount adheres to the display surface of the input/output unit 150, the false detection due to the water adhesion can be prevented. Even if the manipulation input is not received by the input/output unit 150, the manipulation input can be performed using the shutter button 111, the mode selector lever 112, the zoom button 113, and the power switch 114. Therefore, even in the case where the user performs the imaging operation, the basic operations (such as the shutter manipulation and the zoom manipulation) of the imaging operation can be performed.

FIG. 6 illustrates an example in which the manipulation icon that can be manipulated by the user is erased from the display surface to output a warning sound 362 from the sound output unit 170 when the water not less than a predetermined amount adheres to the display surface of the input/output unit 150. In the notification example of FIG. 6, the warning sound 362 is output instead of displaying the warning icon 351 of FIG. 5. For example, the sound of "manipulation is disabled due to water droplet adhesion!" is repeatedly output. The repetitive output may be stopped after continuously performed for a predetermined time (for example, 10 seconds).

The warning icon 361 may be displayed such that the user easily recognizes the output of the warning sound 362 even if the surroundings of the imaging apparatus 100 are noisy. Similarly to the warning icon 351, the warning icon 361 may be displayed in the blinking manner so as to be easily recognized by the user or displayed by a color that can be distinguished from other colors.

A display screen 360 of FIG. 6 differs from the display screen 350 of FIG. 5 only in that the warning icon 361 is displayed instead of the warning icon 351. Therefore, other descriptions are omitted.

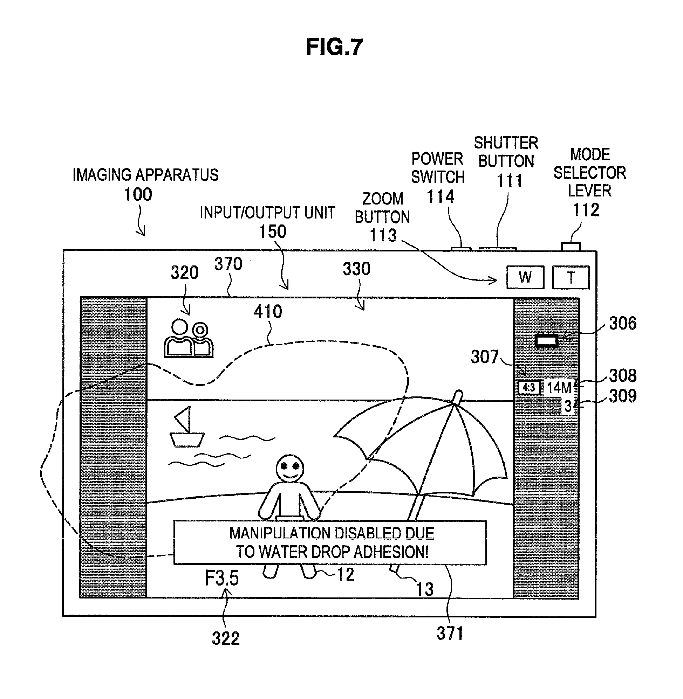

FIG. 7 illustrates an example in which the manipulation icon that can be manipulated by the user is erased from the display surface to display a warning message on a message display region 371 when the water not less than a predetermined amount adheres to the display surface of the input/output unit 150. In the notification example of FIG. 7, a warning message is output instead of displaying the warning icon 351 of FIG. 5. For example, a message of "manipulation is disabled due to water droplet adhesion!" is displayed in a message display region 371. The message is erased after continuously displayed for a predetermined time (for example, 10 seconds), and the warning icon 351 of FIG. 5 may be displayed.

A display screen 370 of FIG. 7 differs from the display screen 350 of FIG. 5 only in that the warning message is displayed in the message display region 371 instead of the warning icon 351. Therefore, other descriptions are omitted.

FIG. 8 illustrates an example in which the manipulation icon that can be manipulated by the user is erased from the display surface to display the warning message on a message display region 376 when the water not less than a predetermined amount adheres to the display surface of the input/output unit 150. The notification example of FIG. 8 differs from that of FIG. 7 only in contents of the warning message. The message of "manipulation of touch panel is disabled due to water droplet adhesion, but manipulation other than touch panel is available!" is displayed in the message display region 3 76. Thus, the user can be notified that the manipulation input can be performed using the shutter button 111, the mode selector lever 112, the zoom button 113, and the power switch 114. The message is erased after continuously displayed for a predetermined time (for example, 10 seconds), and the warning icon 351 of FIG. 5 may be displayed.

In the first embodiment of the present disclosure, in the case where the water not less than a predetermined amount adheres to the display surface of the input/output unit 150, the processing of disabling the manipulation input relating to the manipulation image is performed to erase the manipulation image. Therefore, even if the water adheres to the display surface of the input/output unit 150, the malfunction due to the water adhesion can be prevented. The user is notified that the reception of the manipulation input relating to the manipulation image is disabled, so that the user can understand that the reception of the manipulation input relating to the manipulation image is disabled. Therefore, for example, the user can quickly perform processing of wiping the water adhering to the display surface of the input/output unit 150, and the manipulation input can quickly be resumed in the input/output unit 150.

### (Example of Operation of Imaging Apparatus)

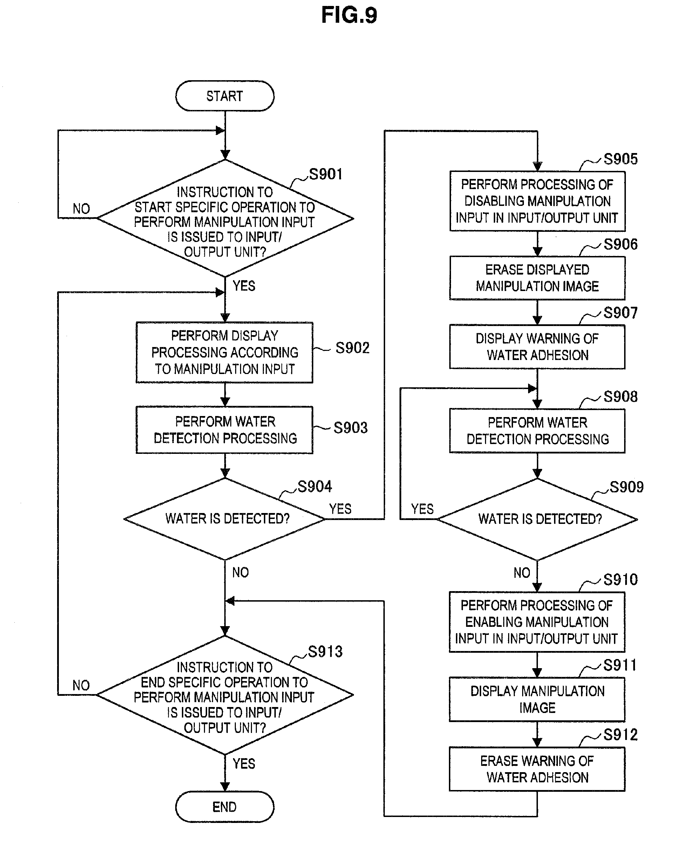

An operation of the imaging apparatus 100 of the first embodiment of the present disclosure will be described below with reference to FIG. 9.

FIG. 9 is a flowchart illustrating an example of a procedure of manipulation image disabling control processing performed by the imaging apparatus 100 of the first embodiment of the present disclosure. In the example of FIG. 9, all the receptions of the plural manipulation icons (manipulation images) that are used to perform the manipulation inputs are disabled to erase all the plural manipulation icons.

First, whether an instruction to start a specific operation to perform the manipulation input is issued in the input/output unit 150 is determined (Step S901). When the instruction to start the specific operation is not issued, monitoring is continuously performed. As used herein, the specific operation means the reproducing operation and the imaging operation, in which the manipulation input is performed in the input/output unit 150. The instruction to start the specific operation is performed by the user's manipulation using the manipulation receiving unit 110.

When the instruction to start the specific operation is issued (Step S901), the display control unit 164 performs the display processing under the control of the control unit 163 in response to the manipulation input received by the manipulation receiving unit 110 or the receiving unit 151 (Step S902). For example, in the case where the setting manipulation of the still image capturing mode is performed, the display control unit 164 performs control so as to cause the display unit 152 to display the display screen 3 00 of FIG. 3A.

The water detecting unit 162 performs water detection processing of detecting the water adhering to the display surface of the input/output unit 150 based on the electrostatic sensor information from the receiving unit 151 (Step S903). When the water adhering to the display surface of the input/output unit 150 is detected through the water detection processing (Step S904), the control unit 163 performs processing of disabling the manipulation input in the input/output unit 150 (Step S905). Step S903 is an example of the water detection procedure described in the claims.

The display control unit 164 then erases the manipulation image (for example, the manipulation icon that is used when the user performs the manipulation input) displayed on the input/output unit 150 (Step S906). The display control unit 164 then causes the display unit 152 to display water adhesion warning information (for example, the warning icon 351 of FIG. 5) (Step S907). The notification that the manipulation input in the input/output unit 150 is disabled is made by the water adhesion warning information. Steps S904 to S907 are an example of the water detection procedure described in the claims.

The water detecting unit 162 then performs the water detection processing of detecting the water adhering to the display surface of the input/output unit 150 based on the electrostatic sensor information from the receiving unit 151 (Step S908). When the water is detected (Step S909), the flow returns to Step S908. While the water is detected (Steps S908 and S909), the display processing is performed in response to the manipulation input received by the manipulation receiving unit 110.

When the water is not detected (Step S909), the control unit 163 performs the enable processing of enabling the manipulation input in the input/output unit 150 (Step S910). The display control unit 164 causes the display unit 152 to display the manipulation image (Step S911). The display control unit 164 erases the displayed water adhesion warning information from the display unit 152 (Step S912), and the flow goes to Step S913.

When the water adhering to the display surface of the input/output unit 150 is not detected (Step S904), whether an instruction to end the specific operation to perform the manipulation input is issued in the input/output unit 150 is determined (Step S913). When the instruction to end the specific operation is not issued, the flow returns to Step S902. For example, the instruction to end the specific operation is the power-off manipulation with the power switch 114. When the instruction to end the specific operation is issued (Step S913), the operation of the manipulation image disabling control processing is ended.

### 2. Second Embodiment

In the first embodiment of the present disclosure, in the case where the water not less than a predetermined amount adheres to the display surface of the input/output unit, the processing of disabling the manipulation input relating to the manipulation image is performed to erase the manipulation image. However, even if the water not less than a predetermined amount adheres to the display surface of the input/output unit, the manipulation input in the input/output unit can frequently be detected while detection accuracy is degraded. In a second embodiment of the present disclosure, even if the water not less than a predetermined amount (first threshold) adheres to the display surface of the input/output unit, only the specific manipulation image is enabled and displayed in the case where the water amount is less than a second threshold (first threshold < second threshold). A configuration of an imaging apparatus according to the second embodiment of the present disclosure is substantially the same as that of FIGS. 1 and 2. Therefore, the components that are common with the first embodiment of the present disclosure are designated by the identical numeral, and the description is partially omitted.

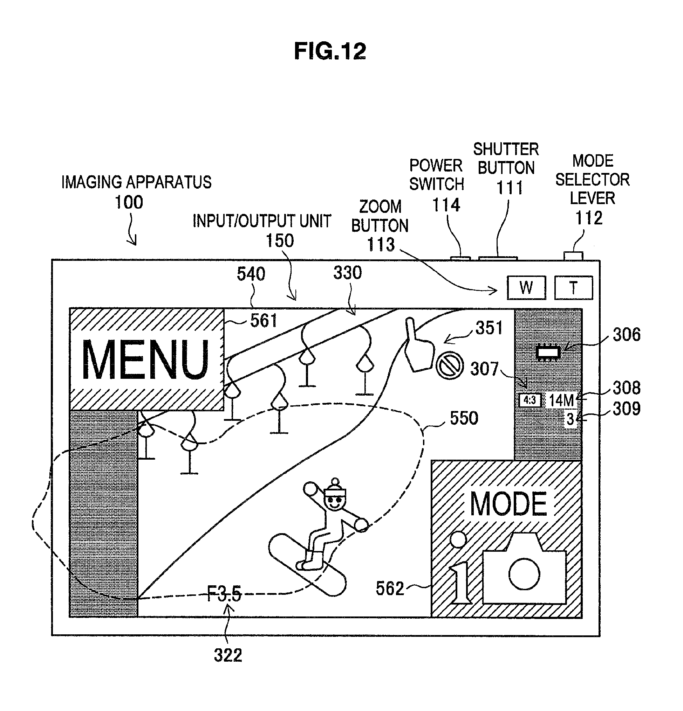

In the case where the amount of water adhering to the display surface of the input/output unit 150 satisfies a predetermined condition, the control unit 163 of FIG. 2 enables only the specific manipulation image in the plural manipulation images. For example, the predetermined condition can be determined as follows. That is, in the case where the water adhering to the display surface of the input/output unit 150 is detected (in the case where the water not less than a predetermined amount (first threshold) adheres), the detected water adhesion amount is less than a predetermined amount (second threshold). For example, as illustrated in FIG. 12, the control unit 163 causes the display unit 152 to display specific manipulation images (a transition button 561 making the transition to the menu screen and a transition button 562 making the transition to the mode switching screen) to erase other manipulation images except the specific manipulation images. In this case, for example, the specific manipulation images can be enlarged and displayed on the display unit 152.

### (Example of Relationship between Water adhering to Display Surface of Input/Output Unit and Operating State of Input/Output Unit)

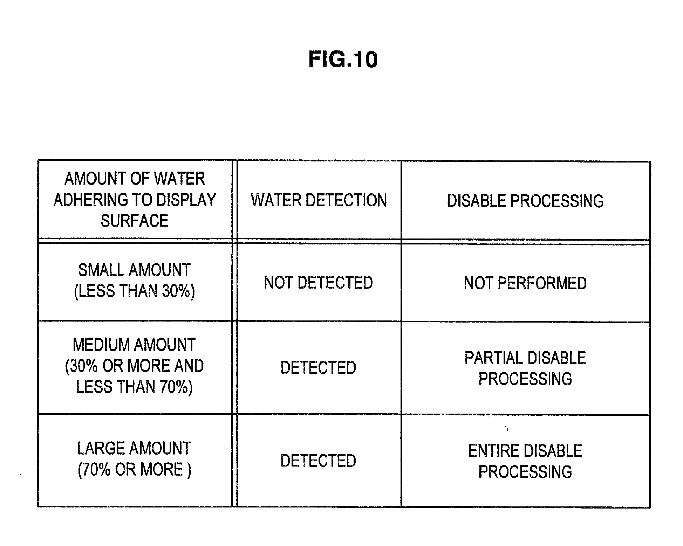

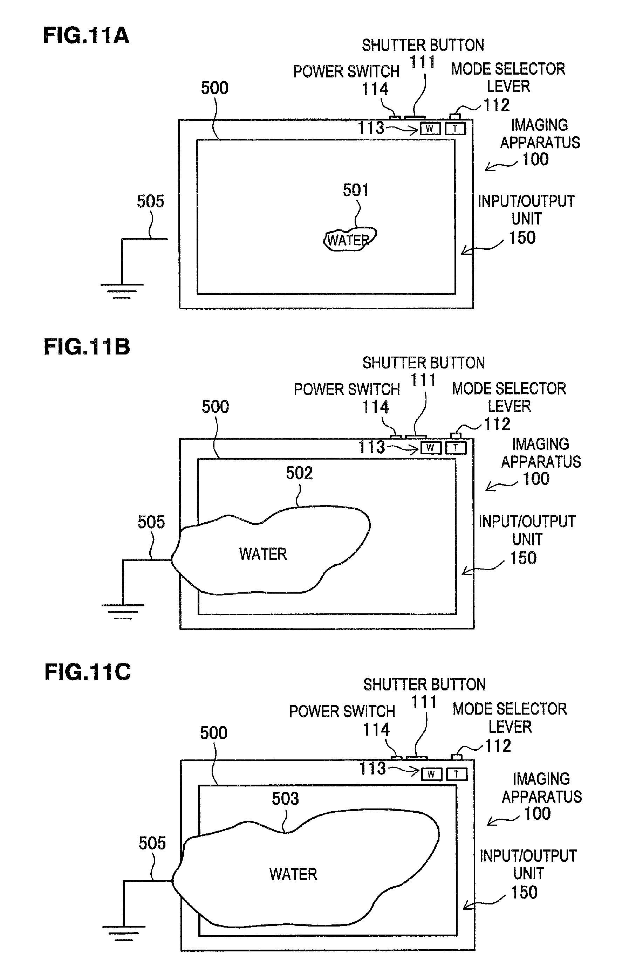

FIGS. 10, 11A, 11B, and 11C are views illustrating examples of the relationship between the water adhering to the display surface of the input/output unit 150 and the operating state of the input/output unit 150 in the second embodiment of the present disclosure. For the purpose of easy understanding, in FIGS. 10, 11A, 11B, and 11C, the amount of water adhering to the display surface of the input/output unit 150 is described while divided into three stages.

FIG. 10 illustrates an example of the relationship among an amount of water adhering to the display surface of the input/output unit 150, the existence or non-existence of the water detected by the water detecting unit 162 and the necessity of the disable processing performed by the control unit 163.

FIG. 11A simply illustrates water 501 adhering to a display surface 500 of the input/output unit 150. FIG. 11B simply illustrates water 502 adhering to the display surface 500 of the input/output unit 150, and FIG. 11C simply illustrates water 503 adhering to the display surface 500 of the input/output unit 150. FIGS. 11A to 11C, like FIGS. 4B and 4C, also schematically illustrate grounding states of the water 501 to water 503, which adhere to the display surface 500, using the numeral 505 that expresses the grounding. FIG. 11A also illustrates the case in which a relatively small amount of water adheres to the display surface 500, FIG. 11B also illustrates the case in which a medium amount of water adheres to the display surface 500, and FIG. 11C also illustrates the case in which a relatively large amount of water adheres to the display surface 500.

For example, as illustrated in FIG. 11A, the charge has little influence on the manipulation input in the case where the small amount of water 501 (for example, the ratio of the water 501 to the display surface 500 is lower than 30%) adheres to the display surface 500 of the input/output unit 150 and the water 501 is not grounded. In this case, the water detecting unit 162 does not detect the water 501 adhering to the display surface 500 of the input/output unit 150. Therefore, similarly to the example of FIG. 4B, the control unit 163 determines that the operating state of the input/output unit 150 is in a normal state and performs various kinds of control. However, when the user touches the portion of the water 501 on the display surface 500 with user's finger, the change in charge is widely generated because the water 501 becomes the grounded state. In this case, the water detecting unit 162 detects the water 501 adhering to the display surface 500.

For example, as illustrated in FIG. 11C, the charge has large influence on the manipulation input in the case where the large amount of water 503 (for example, the ratio of the water 503 to the display surface 500 is not lower than 70%) adheres to the display surface 500 of the input/output unit 150 and the water 503 is grounded. In this case, the water detecting unit 162 detects the water 503 adhering to the display surface 500 of the input/output unit 150. Similarly to the example of FIG. 4C, in order to prevent the malfunction due to the water adhesion, the control unit 163 performs the processing of disabling the manipulation input relating to the manipulation image displayed on the display surface of the input/output unit 150 and erases the manipulation image that becomes the disable target. FIGS. 5 to 8 illustrate examples in which the disabling processing is performed to erase the disabled manipulation image.

For example, as illustrated in FIG. 11B, the charge also has large influence on the manipulation input in the case where the medium amount of water 502 (for example, the ratio of the water 502 to the display surface 500 is not lower than 30% and lower than 70%) adheres to the display surface 500 of the input/output unit 150 and the water 502 is grounded. When the user touches the portion of the water 502 on the display surface 500 with user's finger even if the water 502 is not grounded, because the water 502 becomes the grounded state, the change in charge is widely generated and the charge has large influence on the manipulation input. In this case, the water detecting unit 162 detects the water 502 adhering to the display surface 500 of the input/output unit 150.

However, in the case where the medium amount of water 502 adheres to the display surface 500, the manipulation input in the input/output unit 150 can frequently be detected while the detection accuracy is degraded. Therefore, in such cases, only the specific manipulation image is enabled and displayed such that the user's manipulation is received as much as possible while the malfunction due to the water adhesion is prevented. That is, the control unit 163 performs the processing of disabling a part (except the specific manipulation image) of the manipulation inputs relating to the manipulation images displayed on the display surface of the input/output unit 150 and erases the manipulation images that become the disable targets. The control unit 163 enables the manipulation input relating to the specific manipulation image and enlarges the specific manipulation image. FIG. 12 illustrates the example in which the manipulation inputs relating to the specific manipulation images are enabled to enlarge the specific manipulation images.

### (Display Example in the case where Water adheres to Display Surface of Input/Output Unit)

FIG. 12 is a view illustrating a display example in the case where the water adheres to the display surface of the input/output unit 150 in the second embodiment of the present disclosure. In the example of FIG. 12, it is assumed that the imaging operation is performed in a ski resort with the imaging apparatus 100. For example, it is conceivable that the pouring snow falls on the imaging apparatus 100 and the snow adhering to the display surface of the input/output unit 150 is melted to become water.

In FIG. 12, similarly to the example of FIG. 11B, the medium amount of water 550 adheres to the display surface of the input/output unit 150, and the water 550 is grounded. In FIG. 12, the water 550 is schematically expressed by a bold dotted line for the purpose of the easy description. FIG. 12 illustrates an example in which only part (the plural manipulation icons used to perform the manipulation input and the warning message) of the display mode on the display surface of the input/output unit 150 is changed. FIG. 12 illustrates an example in which a part (except the specific manipulation image) of the receptions of the plural manipulation icons (manipulation images) used to perform the manipulation inputs are disabled to erase the plural manipulation icons that become the disable targets.

As illustrated in FIG. 12, in the case where the medium amount of water 550 adheres to the display surface of the input/output unit 150, the part of the manipulation icons that can be manipulated by the user's manipulation is erased from the display surface, and the warning icon 351 is displayed while only the specific manipulation icon is enlarged and displayed on the display surface. The warning icon 351 is similar to that of FIG. 5.

Examples of the specific manipulation image include a manipulation icon used to set the frequently-used function and a manipulation icon set by the user's manipulation. FIG. 12 illustrates an example in which the transition button 561 making the transition to the menu screen and the transition button 562 making the transition to the mode switching screen are set in the specific manipulation icon. The transition button 561 making the transition to the menu screen and the transition button 562 making the transition to the mode switching screen correspond to the transition button 301 making the transition to the menu screen and the transition button 310 making the transition to the mode switching screen of FIG 3A.

Thus, the disable processing is performed to the manipulation icons except the specific manipulation icon, and the manipulation icons are erased from the display screen 540, so that the manipulation input is not selected by the input/output unit 150. Therefore, in the case where the water not less than a predetermined amount adheres to the display surface of the input/output unit 150, the false detection due to the water adhesion can be prevented.

However, the specific manipulation icon is maintained in the enabled state without performing the disable processing, and enlarged and displayed on the display screen 540, which allows the manipulation input to be performed in the input/output unit 150. Therefore, the manipulation icon used to set the frequently-used function can be used even if the medium amount of water adheres to the display surface of the input/output unit 150. The false detection due to the water adhesion can be prevented by enlarging and displaying the specific manipulation icon, in the case where the water not less than a predetermined amount adheres to the display surface of the input/output unit 150.

At this point, preferably the region where the specific manipulation icon is enlarged and displayed on the display surface of the input/output unit 150 is a region to which the water does not adhere. For example, the control unit 163 specifies the region to which the water does not adhere in the display surface of the input/output unit 150 based on the water detection information (the shape of the contact range in the display surface of the input/output unit 150) from the water detecting unit 162. The control unit 163 enlarges and displays the specific manipulation icon in the region to which the water does not adhere in the display surface of the input/output unit 150. In this case, the control unit 163 may appropriately change the display mode of the specific manipulation icon according to the shape of the region to which the water does not adhere and the number of specific manipulation icons. For example, as illustrated in FIG. 12, the transition button 561 making the transition to the menu screen and the transition button 562 making the transition to the mode switching screen are displayed in the region to which the water 550 does not adhere in the display surface of the input/output unit 150.

Similarly to the first embodiment of the present disclosure, using the sound output or the message display, the user may be notified that only the specific manipulation icon is maintained in the enabled state while the disable processing is performed to other manipulation icons to erase other manipulation icons.

### (Example of Operation of Imaging Apparatus)

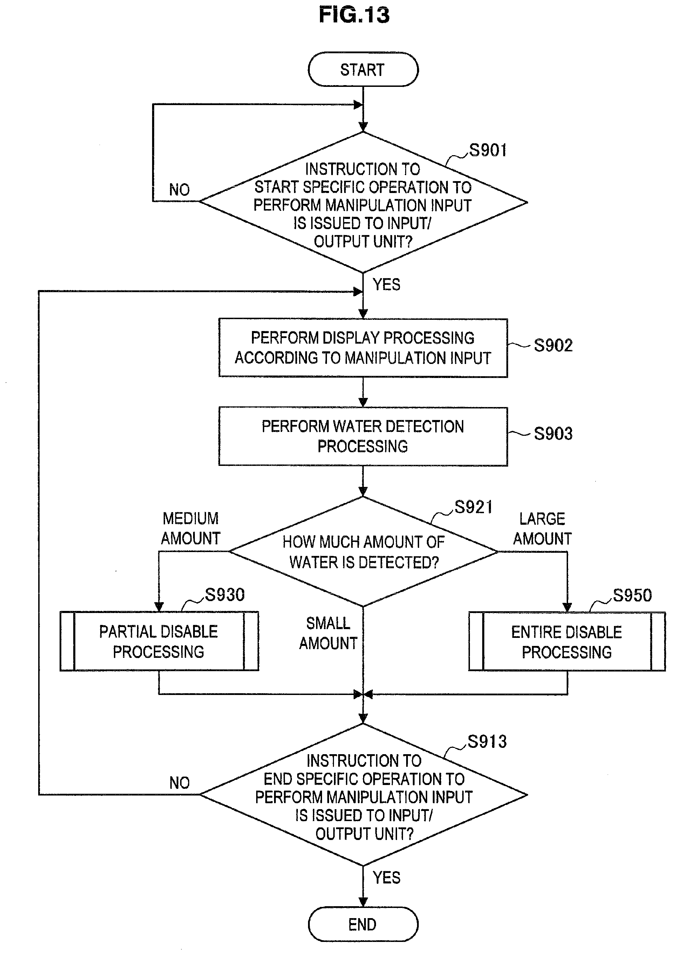

An operation of the imaging apparatus 100 according to the second embodiment of the present disclosure will be described below with reference to FIG. 13.

FIG. 13 is a flowchart illustrating an example of a procedure of manipulation image disabling control processing performed by the imaging apparatus 100 according to the second embodiment of the present disclosure. In the example of FIG. 13, in the plural manipulation icons (manipulation images) used to perform the manipulation inputs, only the specific manipulation icon is enabled and enlarged and displayed on the display surface while the other manipulation icons are disabled and erased. Because the processing procedure of FIG. 13 is a modification of FIG. 9, the portion common with FIG. 9 is designated by the identical numeral, and the description is omitted.

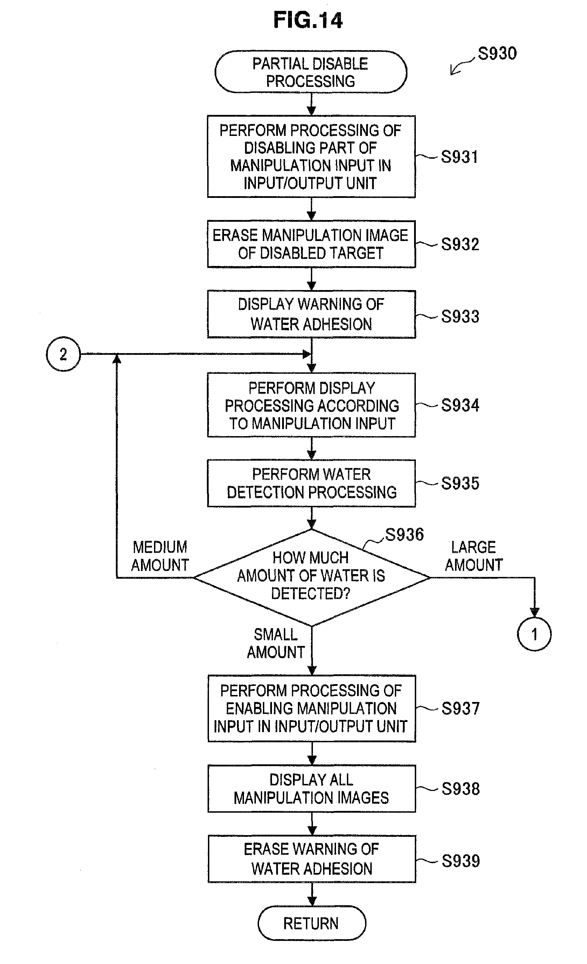

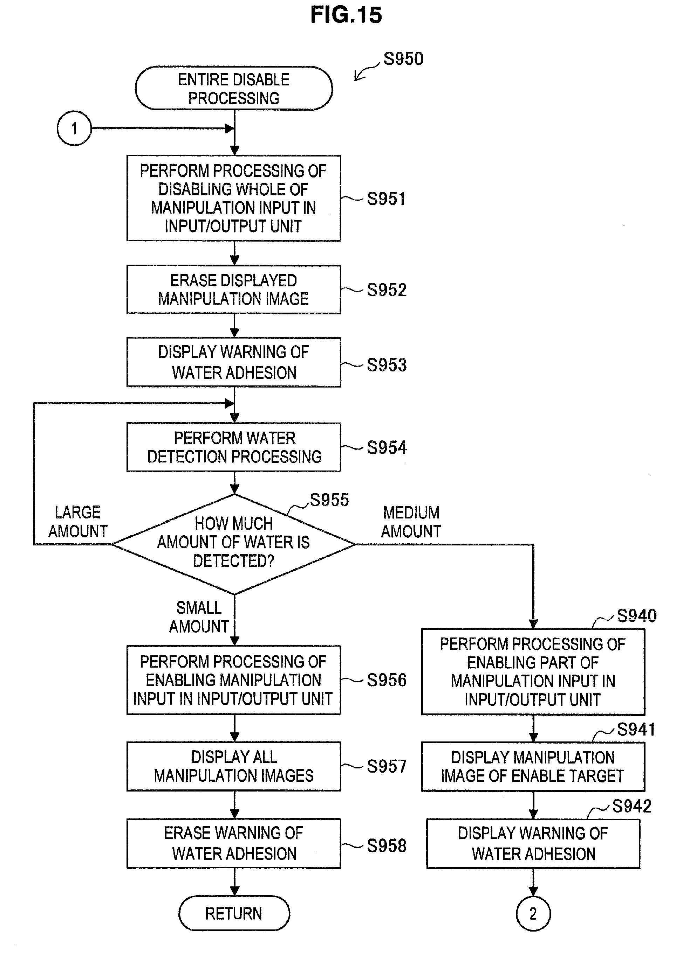

Whether the small, medium, or large amount of water is detected as the detection result through the water detection processing (Step S903) is determined (Step S921). When the small amount of water is detected as the detection result through the water detection processing (Step S903), the flow goes to Step S913. When the medium amount of water is detected as the detection result through the water detection processing (Step S903), the partial disable processing is performed (Step S930). The partial disable processing is described in detail with reference to FIG. 14. When the large amount of water is detected as the detection result through the water detection processing (Step S903), the entire disable processing is performed (Step S950). The entire disable processing is described in detail with reference to FIG. 15.

FIG. 14 is a flowchart illustrating an example of the partial disable processing (procedure of processing in Step S930 of FIG. 13) in the procedure of the manipulation image disabling control processing performed by the imaging apparatus 100 according to the second embodiment of the present disclosure.

First, the control unit 163 performs the processing of disabling a part (manipulation icons except the specific manipulation icon) of manipulation inputs in the input/output unit 150 (Step S931). The display control unit 164 then erases the manipulation image (for example, the manipulation icon except the specific manipulation icon) that becomes the disable target in the manipulation images displayed on the input/output unit 150 (Step S932). The display control unit 164 causes the display unit 152 to display the water adhesion warning information (for example, the warning icon 351 of FIG. 12) (Step S933).

The display control unit 164 then performs the display processing under the control of the control unit 163 in response to the manipulation input received by the manipulation receiving unit 110 or the receiving unit 151 (Step S934). The water detecting unit 162 then performs the water detection processing of detecting the water adhering to the display surface of the input/output unit 150 based on the electrostatic sensor information from the receiving unit 151 (Step S935). Whether the small, medium, or large amount of water is detected as the detection result through the water detection processing is determined (Step S936).

When the small amount of water is detected as the detection result through the water detection processing (Step S935) (Step S936), the control unit 163 performs processing of enabling all the manipulation inputs in the input/output unit 150 (Step S937). The display control unit 164 then causes the display unit 152 to display all the manipulation images (Step S938). The display control unit 164 then erases the displayed water adhesion warning information from the display unit 152 (Step S939).

When the medium amount of water is detected as the detection result through the water detection processing (Step S935) (Step S936), the flow returns to Step S934. When the large amount of water is detected as the detection result through the water detection processing (Step S935) (Step S936), the flow goes to Step S951 of FIG. 15.

FIG. 15 is a flowchart illustrating an example of the entire disable processing (procedure of processing in Step S950 of FIG. 13) in the procedure of the manipulation image disabling control processing performed by the imaging apparatus 100 according to the second embodiment of the present disclosure.

First, the control unit 163 performs the processing of disabling all the manipulation inputs in the input/output unit 150 (Step S951). The display control unit 164 then erases the manipulation images displayed on the input/output unit 150 (Step S952). The display control unit 164 then causes the display unit 152 to display the water adhesion warning information (for example, the warning icon 351 of FIG. 12) (Step S953).

The water detecting unit 162 then performs the water detection processing of detecting the water adhering to the display surface of the input/output unit 150 based on the electrostatic sensor information from the receiving unit 151 (Step S954). Whether the small, medium, or large amount of water is detected as the detection result through the water detection processing is determined (Step S955). While the water is detected (Steps S954 and S955), the display processing is performed in response to the manipulation input received by the manipulation receiving unit 110.

When the small amount of water is detected as the detection result through the water detection processing (Step S954) (Step S956), the control unit 163 performs the processing of enabling all the manipulation inputs in the input/output unit 150 (Step S956). The display control unit 164 then causes the display unit 152 to display all the manipulation images (Step S957). The display control unit 164 then erases the displayed water adhesion warning information from the display unit 152 (Step S958).

When the large amount of water is detected as the detection result through the water detection processing (Step S954) (Step S955), the flow returns to Step S954.

When the medium amount of water is detected as the detection result through the water detection processing (Step S954) (Step S940), the control unit 163 performs the processing of enabling a part (specific manipulation icon) of manipulation inputs in the input/output unit 150 (Step S940). The display control unit 164 then causes the display unit 152 to display the manipulation image (for example, the specific manipulation icon) that becomes the enable target (Step S941). The display control unit 164 then causes the display unit 152 to display the water adhesion warning information (for example, the warning icon 351 of FIG. 12) (Step S942), and the flow goes to Step S934 of FIG. 14.

The water adhesion warning information may be changed and displayed according to the case in which a part of manipulation inputs in the input/output unit 150 is disabled or the case in which all the manipulation inputs are disabled.

Thus, in the second embodiment of the present disclosure, even if the water adheres to the display surface of the input/output unit 150, only the specific manipulation icon is enlarged and displayed on the display surface when the adhesion water amount is less than the predetermined amount (second threshold). In this case, the false detection due to the water detection can be prevented because the specific manipulation icon is displayed in the portion to which the water does not adhere in the display surface of the input/output unit 150. According to the second embodiment of the present disclosure, even if the water adheres to the display surface of the input/output unit 150, the user's manipulation is received as much as possible while the malfunction is prevented during the water adhesion.

In the embodiments of the present disclosure, by way of example, the manipulation icon in which the reception of the manipulation input is disabled is erased from the display unit 152. Alternatively, the disabled manipulation icon is not erased from the display unit 152, but the notification (for example, disable display) that the manipulation icon is disabled may be made.

In the embodiments of the present disclosure, by way of example, it is assumed that the imaging apparatus 100 is splashed with the water. However, for example, the embodiments can also be applied to the case where the imaging apparatus 100 is used in the water (for example, underwater photography). For example, in the case where the imaging apparatus 100 is used in water (in submerging the imaging apparatus 100), because water not less than the predetermined amount (second threshold) adheres to the display surface of the input/output unit 150, the processing of disabling the manipulation inputs relating to all the manipulation images is performed to erase the manipulation images. Alternatively, the notification (for example, disable display) that all the manipulation images are disabled is made.

In the embodiments of the present disclosure, by way of example, the water adhering to the display surface of the input/output unit 150 is detected. The embodiments can also be applied to the case where the imaging apparatus 100 is splashed with other liquid (for example, juice) than the water due to a trouble. That is, the embodiments of the present disclosure can be applied to the liquid that is generally detected as moisture.

In the embodiments of the present disclosure, by way of example, the user is notified using the display of the warning icon or warning message and the output of the warning sound. Alternatively, another notification method may be adopted. For example, the user may be notified by vibration of the imaging apparatus.

In the embodiments of the present disclosure, the imaging apparatus has been described as an example of the electronic apparatus. Alternatively, the embodiments of the present disclosure can be applied to another electronic apparatus including the input/output unit. For example, the embodiments can be applied to the electronic apparatus, such as a game machine, a mobile phone, a digital home electrical appliance (for example, cooking machine such as a rice cooker), a navigation system, and a portable media player, which are provided with touch panels. In the embodiments of the present disclosure, the electronic apparatus including the input/output unit has been described by way of example. Alternatively, the embodiments of the present disclosure can be applied to an electronic apparatus that conducts communication with an external input/output unit to control the input/output unit.

It should be understood by those skilled in the art that various modifications, combinations, subcombinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The processing procedure described in the embodiments of the present disclosure may be recognized as a method including a series of procedures, a program that causes a computer to.execute the series of procedures, or the recording medium in which the program is stored. For example, a CD (Compact Disc), a MD (Mini Disc), a DVD (Digital Versatile Disk), a memory card, and a Blu-ray Disc (registered trademark) can be used as the recording medium.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

The present disclosure contains subject matter related to that disclosed in Japanese Priority Patent Application JP 2010-276129 filed in the Japan Patent Office on December 10, 2010, the entire content of which is hereby incorporated by reference.

### CLAUSES

1. An electronic apparatus comprising:
   a display configured to display an image;
   a liquid detection unit configured to detect liquid on a surface of the display; and
   a display control unit configured to change a display mode of the display based on the detection of liquid on the surface of the display by the liquid detection unit.
2. The electronic apparatus according to clause 1, wherein the display control unit changes at least a part of the image displayed on the display when liquid is detected on the surface of the display by the liquid detection unit.
3. The electronic apparatus according to clause 1, wherein the display control unit removes at least a part of the image displayed on the display when liquid is detected on the surface of the display by the liquid detection unit.
4. The electronic apparatus according to clause 1, wherein the display control unit removes at least one icon from the image displayed on the display when liquid is detected on the surface of the display by the liquid detection unit.
5. The electronic apparatus according to clause 1, wherein the display control unit is configured to change a display mode of the display based on an amount of liquid detected on the surface of the display by the liquid detection unit.
6. The electronic apparatus according to clause 5, wherein the display control unit changes the mode of the display when liquid is detected over the area greater than a first threshold on the surface of the display by the liquid detection unit.
7. The electronic apparatus according to clause 6, wherein the display control unit removes at least one icon from the image displayed on the display when liquid is detected over the area greater than the first threshold on the surface of the display by the liquid detection unit, the at least one icon configured to be touched by the user to enter a command.
8. The electronic apparatus according to clause 7, wherein the display control unit removes the at least one icon from the area where liquid is detected when liquid is detected over the area greater than the first threshold on the surface of the display by the liquid detection unit.
9. The electronic apparatus according to clause 6, wherein the display control unit enlarges a second icon outside the area where liquid is detected when liquid is detected over the area greater than the first threshold on the surface of the display by the liquid detection unit.
10. The electronic apparatus according to clause 6, wherein the input receiving unit disables receiving the command from the user by touching the at least one icon in the area where liquid is detected when liquid is detected over the area greater than the first threshold on the surface of the display by the liquid detection unit.

## Claims

1. An electronic apparatus comprising:
a display configured to display an image;
a liquid detection unit configured to detect liquid on a surface of the display; and
a display control unit configured to change a display mode of the display based on the detection of liquid on the surface of the display by the liquid detection unit.

2. The electronic apparatus according to claim 1, wherein the display control unit changes or removes at least a part of the image displayed on the display or removes at least one icon from the image displayed on the display when liquid is detected on the surface of the display by the liquid detection unit.

3. The electronic apparatus according to claim 1, further comprising:
an input receiving unit configured to receive a command from a user input by touching the display.

4. The electronic apparatus according to claim 3, wherein the display control unit removes at least one icon from the image displayed on the display when liquid is detected on the surface of the display by the liquid detection unit, the at least one icon configured to be touched by the user to enter a command.

5. The electronic apparatus according to claim 3, wherein the input receiving unit disables receiving the command from the user when liquid is detected on the surface of the display by the liquid detection unit.

6. The electronic apparatus according to claim 5, wherein the display control unit adds a warning to the image displayed on the display that the input receiving unit is disabled when liquid is detected on the surface of the display by the liquid detection unit.

7. The electronic apparatus according to claim 1, wherein the display control unit adds a warning to the image displayed on the display that liquid has been detected on the surface of the display by the liquid detection unit.

8. The electronic apparatus according to claim 1, further comprising:
a sound control unit configured to output an audible warning when liquid is detected on the surface of the display by the liquid detection unit.

9. The electronic apparatus according to claim 3, wherein the input receiving unit disables receiving the command from the user when liquid is detected on the surface of the display by the liquid detection unit, the command entered by touching an icon, and the display control unit enlarging a second icon to notify the user that the command has been disabled.

10. The electronic apparatus according to claim 5, wherein the display control unit adds a warning to the image displayed on the display that the input receiving unit is disabled when liquid is detected on the surface of the display by the liquid detection unit, the warning also indicating that commands may be entered using another input receiving unit outside the display.

11. The electronic apparatus according to claim 6, wherein the display control unit removes the warning from the display after a predetermined period of time.

12. The electronic apparatus according to claim 1, wherein the display control unit is configured to change a display mode of the display based on an amount of liquid detected on the surface of the display by the liquid detection unit.

13. The electronic apparatus according to claim 12, wherein the display control unit changes the mode of the display when liquid is detected over the area greater than a first threshold on the surface of the display by the liquid detection unit.

14. A method comprising:
displaying an image on a display;
detecting liquid on a surface of the display; and
changing a display mode of the display based on the detection of liquid on the surface of the display.

15. A non-transitory computer readable medium encoded with computer readable instructions which, when loaded on a processor, cause the processor to execute a method comprising:
displaying an image on a display;
detecting liquid on a surface of the display; and
changing a display mode of the display based on the detection of liquid on the surface of the display.
